# EUROPEAN PATENT APPLICATION

(11) **EP 1 953 715 A1**
(43) Date of publication of application: **06.08.2008**
(21) Application number: 08154318.3
(22) Date of filing: 05.04.2001
(51) Int. Cl.: G07F 7/10, G06Q 20/00

(54) **Control method and automatic apparatus**

(30) Priority: 05.04.2000 FI 20000804
(62) Divisional of application: 01925603.1
(71) Applicant: Suomalaiset Raha-Automaatit Payazzo Finland Oy Ab, 02100 Espoo (FI)
(72) Inventor: Lampén, Pentti, 00570, Helsinki (FI)
(74) Representative: Brax, Matti Juhani

(57) **Abstract**

The invention relates to a method and arrangement for wireless control of an operation, such as a purchase transaction carried out with an automatic apparatus. The invention is especially suitable for using vending and amusement machines by means of a mobile station. An essential idea of the invention is the fact that the control of the automatic apparatus (200) takes place by means of a digital message (260) sent by the user. This message is preferably a short message, which means a message transmitted in a mobile communication system (250), for which a circuit-switched call connection is not established. In addition, the selection of the product to be purchased preferably takes place on the basis of the content of the short message sent by the buyer. The content of the sent message is recognized and the control unit (201) of the automatic apparatus (201) is directed to move the desired product to the trough (240) of the automatic apparatus. The buyer is also invoiced on the basis of the product recognized from the message (280, 281).

## Description

The present invention relates to a method and arrangement for wireless control of the operation of a device, such as a purchase transaction performed using an automatic apparatus. The invention is especially suitable for using vending machines, service apparatus and amusement machines by means of a mobile station. Here a vending machine means an apparatus which comprises a stock of commodities, such as beverages, which can be bought for payment. A service apparatus can be e.g. a parking meter or car washing plant or other automatic apparatus used for payment. An amusement machine means here, in addition to ordinary gambling game machines, children's amusement equipment, for example.

Conventionally, vending and amusement machines operate by inserting the required amount of cash, i.e. coins or notes, into the machine, after which the product to be purchased (article or game) is selected. If the stock of the machine contains the selected article, it is transferred to the trough, from which it can be taken by the buyer. The possible change is also given to the buyer. In an amusement machine, the playing of the game and the payment of the possible winnings correspond to the dispensing of the goods.

The conventional slot machines described above have the drawback that the use of the machine requires suitable cash. In addition, the cash handling and recognition equipment of the slot machines are complicated and susceptible to failure.

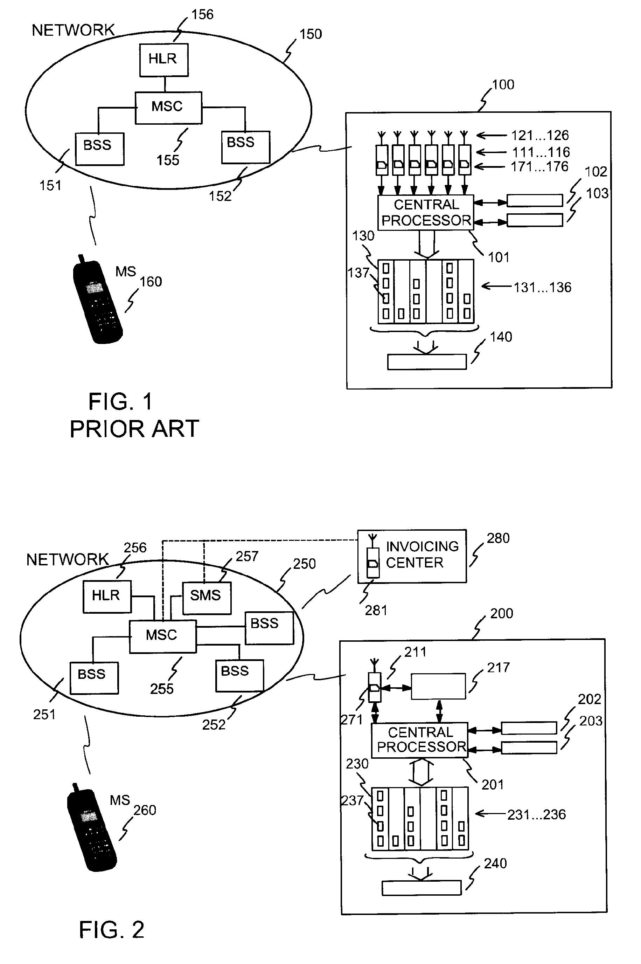

In order to eliminate the need to use cash, there has been developed a solution in which the automatic apparatus can be used by means of a telephone, especially a mobile station. A solution like this is illustrated in Fig. 1. According to prior art, the use of the apparatus takes place as follows. The stock 130 of the apparatus 100 comprises storage spaces 131-136 for each different product 137. The price of the product and the telephone number corresponding to the product is shown on the automatic apparatus 100 for each product to be purchased. Having selected the desired product, the user makes a call from the mobile station 160 to the number corresponding to the selected product. In the mobile communication network 150, the connection is directed via the base station systems 151 and 152 and the mobile switching centre 155 to the product-specific mobile station module 111-116 in the apparatus, which sets up a telephone connection when a call is made to the number corresponding to the product. Each mobile station module is connected to the base station system by means of its antenna 121-126. At the same time, the mobile station module directs the central unit 101 of the apparatus to dispense the desired product from the stock 130 of the apparatus to the trough 140, from which the product is available to the user.

Payment is effected so that the administrator of the apparatus has agreed with the mobile station operator on a price to be charged on the basis of the call from the buyer of the product in connection with the telephone bill. This price is registered in the home location register 156 of the mobile station of the buyer. This includes the payment for the product received by the administrator of the apparatus and the commission received by the mobile station operator.

If the storage of the automatic apparatus does not contain the desired product, the mobile station module in the apparatus does not answer the call, i.e. set up a telephone connection. Thus the buyer knows that it is not possible to purchase the product, and the call is not charged, either, because the connection was not established.

Fig. 1 also presents the cash reception means 102 and the user interface means 103, such as a keypad and a display.

However, a prior art solution according to Fig. 1 has the drawback that the manufacturing and operating costs of the automatic apparatus are relatively high. This is due to the fact that the automatic apparatus must have a mobile station module 111-116 for each product, and a SIM (Subscriber Identity Module) card 171-176 or user interface is needed for each module. Naturally, this limits the number of alternative products sold through the apparatus. In addition, there is the problem that mobile station systems have a limited telephone number space, and therefore a growing number of the apparatuses described above would consume a substantial part of the number space of the mobile communication system. Furthermore, the prior art entails the drawback that the prices of the products must be agreed on with the operator, which links them with the telephone numbers corresponding to the products, and that makes it difficult to change the prices dynamically.

A document D1 (JP A 08249530) discloses a solution for controlling a vending machine (hereinafter VM) using a mobile station like device, namely migration telephone. The solution of D 1 comprises a private-telephone exchange installed within an enclosure, the enclosure comprising number of separated vending machines, which can be controlled with said separated migration telephones. According to D 1 the user calls the telephone number of the VM in order to sent signal to the VM. A controller in the VM reads the telephone number of the migration telephone, whereupon, if the number is permitted, the migration telephone and the VM concerned use the migration telephone as a cordless handset, and both communications of them are attained by using the VM as a main phone. After establishing the dial up -connection between the migration telephone and VM and using the VM as a main phone, the controller transmits a goods selectable signal to a goods selection section, whereupon the goods selection section will display "please choose goods" etc. on the indicator. In order to select the desired product the user uses the good selection carbon button.

In addition, a document D2 (WO A 9745814) discloses a Mobile-Wallet-Phone (MWP), by which a user can perform purchase payment and bill payment transactions and transferring of electronic or telecash and other required data directly between terminals under a small terminal-to-terminal radio coverage.

It is an object of the invention to provide a solution by which the drawbacks of the prior art can be reduced.

Therefore the problem the present invention solves is to achieve a very simple and cost-effective apparatus for offering under an operation at least one product or service of at least two different products or services, where the apparatus can be used without coins, namely with a mobile station. The objective technical problem the present invention solves is also to reduce the number of mobile station modules or modems in the apparatus, and alleviate the problems relating to the limited telephone number space, and thereby make possible to manufacture very simple and cost-effective apparatuses.

An essential idea of the invention is the fact that the control of an automatic apparatus, for example, is effected by means of a digital message sent by the user. This message is preferably a short message, which means a (text) message transmitted in a mobile communication system, for which a circuit-switched connection is not established. In addition, the selection of the product to be purchased preferably takes place on the basis of the content of the text message sent by the buyer. Thus the text message to be sent to the telephone number of the automatic apparatus can be, for example, "chocolate", "liquorice", "chewing gum", "beer" or the name of a product, such as "Pepsi"®, "Sprite"®, or depending on the apparatus, "1" (washing program 1), "5" (parking fee 5 Euros), "10" (parking time 10 min) etc. The content of the sent message is recognized and the control unit of the apparatus is directed to move the desired product to the trough of the apparatus. The buyer is also invoiced on the basis of the product recognized from the message. The invention is suitable for use in mobile communication systems, which include the possibility of sending digital messages, such as the GSM and UMTS systems.

The present invention provides many remarkable advantages as compared to the prior art. Only one mobile station module, one SIM card and one user interface/telephone number are needed for each automatic apparatus. Thus the manufacturing and operating costs of the apparatus can be kept low. Even a high number of apparatuses does not consume the telephone number space of the mobile communication system substantially, either.

The present invention also has the advantage that the prices of the products can be easily changed, when required, because the price of the call does not depend on the called telephone number. The price of each product can thus be changed by contacting the invoicing centre by a short message sent by the mobile station, for example.

The method according to the invention for controlling the operation of an apparatus is characterized by the features disclosed in the characterising portion of the independent method claim 1.

The automatic apparatus according to the invention is characterized by the features disclosed in the characterising portion of the independent apparatus claim 8.

Preferred embodiments of the invention are set forth in the dependent claims.

In the following, the invention will be described in detail with reference to the attached drawings, wherein
- Figure 1: presents a block diagram of a prior art arrangement for controlling the operation of an apparatus,
- Figure 2: presents a block diagram of an arrangement according to the invention for controlling the operation of an apparatus, and
- Figure 3: presents a flow chart of a method according to the invention for controlling the operation of an apparatus.

Figure 1 was dealt with above in connection with the description of the prior art.

Fig. 2 presents a block diagram of an arrangement according to the invention for controlling the operation of a vending machine. The vending machine 200 comprises a prior art product storage 230 with spaces 231-236 for each product type. Fig. 2 also shows products 237 placed in the storage. The central unit 201 controls the transfer of the products to the trough 240 in connection with the purchase transactions. The vending machine shown by Fig. 2 also comprises prior art equipment 202 for receiving cash and user interface means 203, such as a display and press keys.

The arrangement shown by Fig. 2 comprises a mobile station module 211 for purchases carried out with a mobile station 260; there is only of said modules in the vending machine. The mobile station module includes one SIM card 271 for establishing a connection with the mobile communication system 250. When the user wants to buy a product from the vending machine by using a mobile station, he/she sends a short message to the mobile station module of the vending machine via the base station systems 251, 252 of the mobile communication system. In short, the user sends a message containing the name of the product to the telephone number shown on the vending machine.

When the mobile station module of the vending machine receives the short message, it transmits the message to the short message module 217, which recognizes the name of the desired product from the received short message. After this, the short message module 217 transfers the information to the central unit, which directs the desired product from the storage to the trough.

After this, when the short message module has received the information that the desired product was available in the storage, it forms an invoicing short message and inputs it to the mobile station module. The mobile station module sends the invoicing short message further over the mobile communication system to the mobile switching centre and possibly further to the invoicing centre 280. The invoicing short message may be the same short message containing the name of the product, which the mobile station module received from the user's mobile station. However, the invoicing short message must indicate the sender of the original short message, the user, to enable the invoicing centre to direct the charges to the right user.

Invoicing may take place, in the same way as in the prior art solutions, by adding the price of the purchase to the user's telephone bill in the user's home location register 256. However, the system may include invoicing centres 280 outside the mobile station operator, to which the purchase information is directed. Such an invoicing centre may be connected to the mobile communication system via the mobile station module 281 or by wiring to the mobile switching centre or the short message centre 257. There price information of each product is kept in the invoicing centre, and it is possible to arrange the prices to be changed by means of a short message transferred over the mobile communication system. The invoicing centre may transmit the purchase to be invoiced by a bank, for example, (direct debiting from the user's account) or by a credit card company (credit card payment). It is also possible that the invoicing centre comprises storage management, which follows the product stock of the vending machines on the basis of information received from the vending machines.

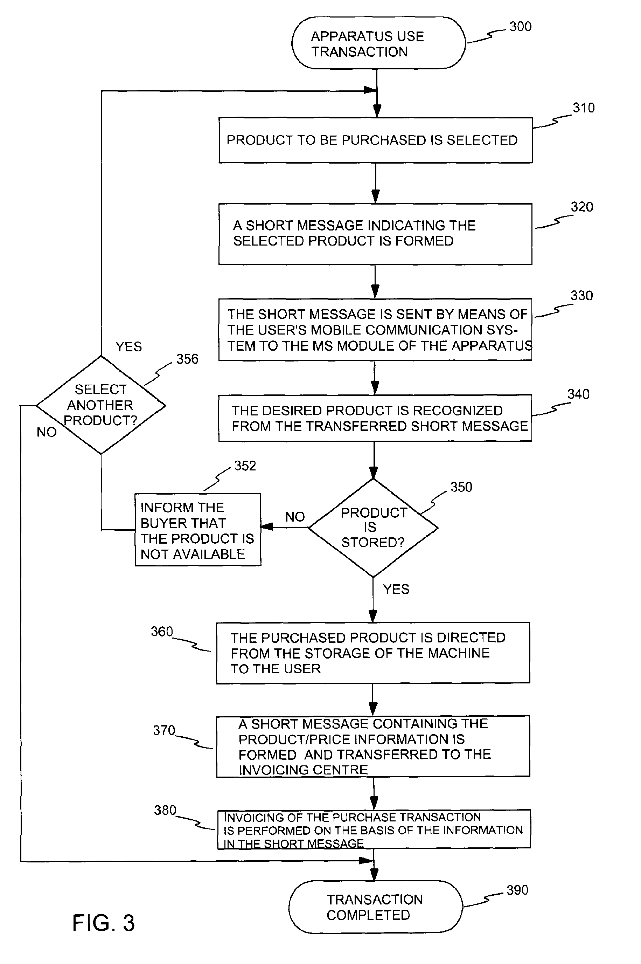

Fig. 3 presents a flow chart of a method according to the invention for performing the transaction 300 of using an automatic apparatus. When the user wants to buy a product, the first task is to select a product from the options shown on the machine, 310, and to write the name of the selected product in a short message (so-called text message), 320. After this, the user sends a short message to the number shown on the machine, 330. Then the mobile communication system transmits the message to the mobile station module in the machine.

When the mobile station module of the vending machine has received the short message, the name of the product written on the short message is recognized from it, 340. After this, it is checked if the product is available in the storage of the machine, 350. If the machine has run out of the product, information about this is given to the user, 352, by means of a short message sent to the user or by text shown on the display of the machine. Then the user has the possibility of selecting another product, 356, 310.

If the storage of the machine contains the desired product, it directs the product to the trough for the user, 360. In addition, an invoicing short message is formed, containing information of the purchased product and buyer, and an invoicing short message is sent to the mobile communication system and home location register or other invoicing centre for invoicing the user, 370, 380. Thus the invoicing short message may be the same short message containing the name of the product, which was received by the mobile station module from the user's mobile station. However, the invoicing short message must indicate the sender of the original short message, the user, to enable the invoicing centre to direct the charges to the right user.

As was mentioned above, it is possible to define the prices of the products by means of a message sent to the invoicing centre, for example, because the price of the product is not linked with the telephone number of the machine. A message like this can be e.g. a short message with the user identifier and password, the name of the product and the new price. These four fields of the short message can be separated by a certain marker, such as a comma, to enable the invoicing centre to identify the fields. When a comma is used as the separator, it is possible to form short messages easily from price information inputted to a spreadsheet program, for example. A user identifier and password are used to prevent the access of outsiders to change the price information. An alternative or additional possibility is to use identification of the calling subscriber number, which sent the short message. For example, the maximum length of a short message of the GSM system is 160 characters, and thus the above mentioned fields and their separators can be easily fitted in one short message.

Some preferred embodiments of the solution according to the invention have been described above. Naturally, the principle of the invention can be modified within the scope defined by the attached claims e.g. with regard to the details of implementation and the range of use. Although the above described embodiments dealt with the GSM system and the short messages/text messages related to it, it is clear that the invention can also be applied in other digital mobile communication systems in a corresponding manner. In the description of the embodiments above, the invention was applied to vending machines for commodities, such as beverages, but the invention can naturally also be applied to other apparatus where it is required that the control/selection related to the operation of the apparatus and/or the related invoicing is carried out wirelessly without cash. Examples of these are automatic service apparatus, such as parking meters and car washing plants. In addition, it should be noted that although the short messages comprised the name of the selected product in the examples described above, it is naturally also possible to identify the selected product in other ways, such as a number code shown on the machine.

It may further be noted that the invention can also be used for monitoring the state of an apparatus, especially for monitoring the state of vending machines, service apparatus and amusement machines, by means of a mobile station. When the apparatus comprises a mobile station module connected to a mobile communication system, information about the state of the apparatus can be transferred to the control system by means of short messages transmitted by the mobile communication system. Thus the state of the machine can be monitored in real time with a mobile station, for example, and it is not necessary to establish connections to the machines to be monitored. The "state" to be monitored can be e.g. the product storage situation of the machine, the operating condition of the parts, the filling state of the cash storage, etc. Examples of other machines to be monitored are parking meters, heating stations etc. By means of such a monitoring arrangement it is possible to minimize the number of service and maintenance visits to the apparatus and the related travelling. Messages related to monitoring can be sent from the apparatus e.g. on the basis of exceeding/falling below a set control limit at regular intervals, or e.g. on the basis of a short message request sent to the apparatus.

## Claims

1. A method for controlling the operation of an apparatus (200) with a mobile station (260), the apparatus being adapted to offer at least two different products (237) under the operation, where the desired product is selected using the mobile station (260),
**characterized in that**
- the product to be selected is identified by forming a digital short message (320) in the mobile station, where the digital short message comprises a code related to said product,
- said digital short message is transferred (330) via the mobile communication system (250) without establishing a circuit-switched connection for said mobile communication system to the apparatus, and
- the product to be selected is recognized (340) on the basis of the code of said recognized digital short message in the apparatus and said operation for offering said selected product is performed (360) by the apparatus.

2. A method according to claim 1, wherein said operation is the use of a vending machine, service apparatus or amusement machine (300).

3. A method according to claim 2, wherein said product is a concrete product, service or game purchased through the apparatus.

4. A method according to any one of the preceding claims, wherein the user is invoiced on the basis of the content of the recognized digital message (380).

5. A method according to any one of the preceding claims, wherein a digital invoicing message (370) is formed in the apparatus, containing information about the purchased product and/or the price of the purchased product, and the formed message is transferred by means of the mobile communication system to the invoicing centre, whereby the user is invoiced on the basis of the content of the message transferred to the invoicing centre.

6. A method according to any one of the preceding claims, wherein it is checked whether the desired product is available in the storage (350) of the apparatus, and the digital invoicing message is sent only when the product is available in the storage for performing the purchase transaction.

7. A method according to any one of the preceding claims, wherein the price of the product has been specified by storing it in the invoicing centre, and the price is changed by sending a digital message which identifies the product and price to the invoicing centre.

8. An automatic apparatus (200), the operation of which is adapted to be controlled with a mobile station (260), the apparatus further being adapted to offer under the operation at least two different products (237) under the operation, and where the desired product is adapted to be selected using the mobile station (260),
**characterized in that**
- the product to be selected is adapted to been identified by forming a digital short message (320) by the mobile station (260), where the digital short message comprises a code related to said product whereupon
- said automatic apparatus comprises means for receiving said digital short message (211, 217) transferred by means for transferring a digital message (251, 252, 255, 260, 211, 271) via a mobile communication system (250) without establishing a circuit-switched connection for said mobile communication system to the apparatus, and
- said automatic apparatus comprises means for recognizing (217) the product based on the code of said recognized digital short message (201, 239, 240), and means for performing said operation to offer said selected product on the basis of the code of said recognized digital short message (201, 239, 240).

9. An automatic apparatus according to claim 8, wherein it is a vending machine, service apparatus or amusement machine (200).

10. An automatic apparatus according to claim 8 to 9, wherein said digital product is a concrete product, service or game purchased through the apparatus.

11. An automatic apparatus according to claim 8 to 10, wherein it is a vending machine (200), and that said operation is the transfer of the desired product (237) from the storage (230) of the vending machine to a place where it is immediately available to the user (240).

12. An automatic apparatus according to any one of claims 8 to 11, wherein it comprises means for forming a digital invoicing message (217, 201, 211), whereby the invoicing message includes information about the product (237) to be purchased and/or price information, and means for sending an invoicing message (217, 211, 201, 250, 281) to the invoicing centre (280) for invoicing the purchase transaction.

13. An automatic apparatus according to any one of claims 11 to 12, wherein it comprises means for recognizing (201) the storage situation of a certain product in the automatic apparatus (200), and means (201, 217, 211) for arranging the transmission of a digital invoicing message to depend on whether the product is available in the storage of the machine or not.

14. An automatic apparatus according to any one of claims 11 to 13, wherein it comprises means for recognizing (201) the storage situation of a desired product in the automatic apparatus (200), and means for sending a return message (211, 271, 217) to the user when the storage of the apparatus has run out of the desired product.

15. An automatic apparatus according to any one of claims 11 to 14, wherein it comprises means for recognizing (201) the storage situation of a desired product in the automatic apparatus (200), and user interface means (203) for informing the user when the storage of the apparatus has run out of the desired product.
